# EUROPÄISCHE PATENTSCHRIFT

(11) **EP 2 119 339 B1**
(45) Veröffentlichungstag und Bekanntmachung des Hinweises auf die Patenterteilung: **13.04.2011**
(21) Anmeldenummer: 09159853.2
(22) Anmeldetag: 11.05.2009
(51) Int. Cl.: A01D 41/127, A01D 43/08

(54) **Messanordnung zur Bestimmung der Inhaltsstoffe einer aus einem Erntegutstrom entnommenen Probe**
Measuring assembly for calculating the content materials of a sample removed from a stalk crop flow
Agencement de mesure destiné à la détermination des composants d'un échantillon extrait d'un flux de récoltes

(30) Priorität: 15.05.2008 DE 102008001783
(43) Veröffentlichungstag der Anmeldung: 18.11.2009
(73) Patentinhaber: Deere & Company, Moline, IL 61265 (US)
(72) Erfinder: Kormann, Dr., Georg, 66482, Zweibrücken (DE)
(74) Vertreter: Holst, Sönke

(56) Entgegenhaltungen:
- EP-A- 1 825 740
- DE-A1- 19 922 867
- DE-C1- 10 236 515

## Beschreibung

Bei der Ernte landwirtschaftlich angebauter Pflanzen besteht in vielen Fällen ein Interesse, detaillierte Informationen über die Inhaltsstoffe und andere Eigenschaften der Pflanzen zu erlangen. Es wurde daher vorgeschlagen, eine geeignete Messeinrichtung dem Erntegutstrom benachbart anzuordnen, die ihn mit breitbandigem, im sichtbaren Wellenbereich oder nahen Infrarot liegendem Licht bestrahlt und anhand der Spektren des reflektierten Lichts die Inhaltsstoffe identifiziert. Die Messeinrichtung kann bei einem Mähdrescher an Korntankbefüllschnecken angeordnet sein und direkt mit dem geförderten Komstrom zusammenwirken (US 6 100 526 A) oder es wird ein Teil des Kornstroms abgezweigt und in eine Messkammer eingeführt, welcher die Messeinrichtung zugeordnet ist (US 5 751 421). Bei Feldhäckslern ist die Messeinrichtung üblicherweise an der Austrageinrichtung für das gehäckselte Erntegut angebracht (DE 199 22 867 A). Es wurde auch vorgeschlagen, bei einem Feldhäcksler einen Teil des gehäckselten Erntegutstroms abzuzweigen und ihn mittels einer Fördereinrichtung an einer Messeinrichtung vorbeizuführen (DE 102 36 515 C und US 5 991 025 A).

Vor mit Nahinfrarotmesseinrichtungen durchgeführten Laboranalysen von Futter wird die Probe üblicherweise gehäckselt (DE 32 49 175 T).

Die EP 1 825 740 A1 beschreibt ein Verfahren und eine Vorrichtung zur Bestimmung der Verdichtungseigenschaften von Erntegut. Unterhalb einer Häckseltrommel eines Feldhäckslers wird ein Teil des gehäckselten Ernteguts in eine Messkammer geführt und dort mittels eines linear und rotativ beweglichen, angetriebenen Verdichtungskolbens zusammengedrückt. An der Messkammer ist ein kapazitiver Feuchtigkeitssensor vorgesehen. Die Verdichtungskraft und die Rotationsbewegung können vom Feuchtegrad des Ernteguts abhängen.

Als nachteilig erweist sich bei den Messeinrichtungen, an denen ein abgezweigter Teil des Erntegutstroms vorbeigeführt wird, dass bei größeren Erntegutteilchen bzw. Schnittlängen der größte Teil der Messwerte an ungeschnittenen und oftmals auch verschmutzten Oberflächen des Materials gewonnen wird, so dass keine aussagekräftigen Informationen zu den Inhaltsstoffen erhalten werden. Außerdem können sich bei den größeren Erntegutteilchen oder Schnittlängen Hohlräume in den Proben bilden, die ebenfalls zu unbrauchbaren Spektren und Messwerten führen, oder es wird ein wenig repräsentativer Materialstrom entnommen, da große Partikel nicht in den Probennehmer gelangen. Weiter steigt mit großen Erntegutteilen das Risiko, dass der Probennehmer verstopft.

### Aufgabe der Erfindung

Die der Erfindung zu Grunde liegende Aufgabe wird darin gesehen, eine Messanordnung zur Bestimmung der Inhaltsstoffe einer aus einem Erntegutstrom entnommenen Probe bereitzustellen, die auch bei größeren zu untersuchenden Erntegutmaterialien oder Schnittlängen funktionsfähig bleibt und verlässliche Messwerte liefert.

### Lösung

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Messanordnung umfasst einen Abzweigkanal, der sich zwischen einer Öffnung eines Erntegut führenden Kanals und einer Messeinrichtung erstreckt, die zur Bestimmung der Inhaltsstoffe der im Abzweigkanal enthaltenen Probe des Ernteguts dient. Zwischen der Öffnung zum Kanal und der Messeinrichtung ist eine Bearbeitungseinrichtung angebracht. Die Probe wird durch die Bearbeitungseinrichtung derart aufbereitet, dass die Messeinrichtung verbesserte oder optimierte Spektren erzeugt, mit denen die Inhaltsstoffe verlässlich ermittelt werden können. Im Einzelnen kann die Bearbeitungseinrichtung die Probe (zer)quetschen und/oder zerkleinern, insbesondere Häckseln, Spalten oder Mahlen.

Die Messeinrichtung ist mit einem Rechner verbunden. Der Rechner bestimmt anhand der Messwerte der Messeinrichtung, insbesondere der Spektren, ob die Qualität der Messwerte hinreichend ist oder nicht. Außerdem ist der Rechner mit einem Aktor verbunden, der wiederum den Einwirkungsgrad der Bearbeitungseinrichtung auf die Probe steuert. Wenn die Spektren beispielsweise darauf hinweisen, dass zu einem großen Teil nur unbearbeitete (ungehäckselte o. dgl.) Oberflächen der Probe erfasst wurden, oder dass die Probe größere Hohlräume enthält, kann der Rechner den Einwirkungsgrad der Bearbeitungseinrichtung vergrößern und beispielsweise die von der Bearbeitungseinrichtung erzeugte Schnittlänge oder beim Mahlen erreichte Korngröße verkleinern oder die Quetschkraft vergrößern. Um den Probendurchsatz nicht unnötig klein werden zu lassen, wird der Bearbeitungsgrad durch den Rechner vorzugsweise aber nur so groß gewählt, dass geeignete Messwerte erzielt werden, aber nicht größer.

Die Erfindung kann an beliebigen Erntemaschinen Verwendung finden, in denen Erntegut durch einen Kanal strömt. Beispiele sind Mähdrescher, bei denen der Kanal gereinigtes Korn oder Erntegutreste aufnimmt, oder Feldhäcksler, bei denen der Kanal von gehäckseltem Erntegut durchströmt wird.

### Ausführungsbeispiel

Anhand der Abbildungen wird ein Ausführungsbeispiel der Erfindung erläutert. Es zeigt:
- Fig. 1: eine teilgeschnittene seitliche Ansicht eines Mähdreschers mit einer Messanordnung zur Bestimmung der Inhaltsstoffe einer aus einem Erntegutstrom entnommenen Probe, und
- Fig. 2: eine vergrößerte seitliche Ansicht der Messanordnung aus Figur 1.

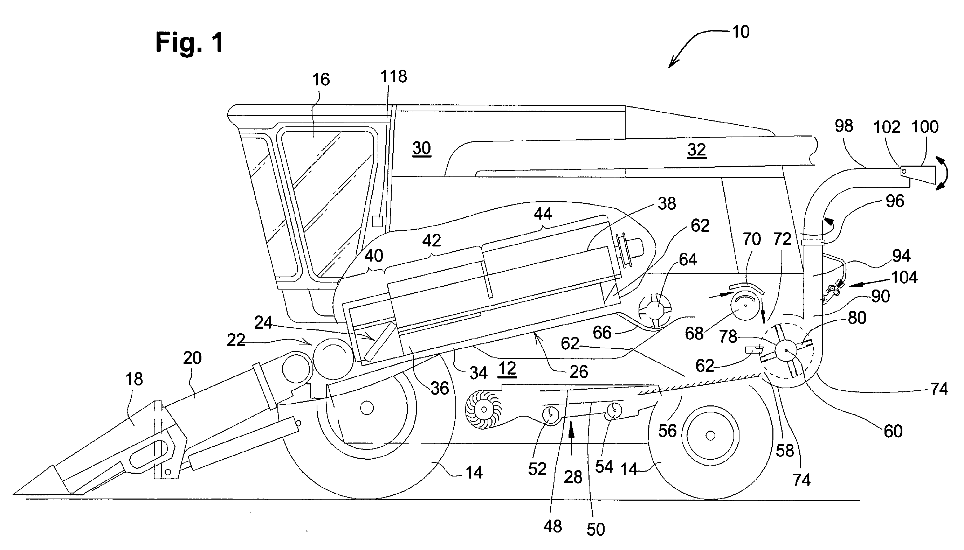

Die Figur 1 zeigt einen landwirtschaftlichen Mähdrescher 10 mit einem Fahrgestell 12 mit im Eingriff mit dem Boden befindlichen Rädern 14, die am Fahrgestell 12 befestigt sind und zum Vortrieb des Mähdreschers 10 in einer Vorwärtsrichtung dienen, die in der Figur 1 nach links verläuft. Der Betrieb des Mähdreschers 10 wird von der Bedienerkabine 16 aus kontrolliert. Ein Maispflücker 18 wird verwendet, um von auf dem Feld stehenden Maispflanzen die Kolben abzutrennen und sie einem Schrägförderer 20 zuzuführen, während die Stängel durch an der Unterseite des Maispflückers 18 angeordnete Stängelhäcksler zerteilt und auf dem Feld verteilt werden. Das Erntegut (d. h. die geernteten Kolben) wird durch den Schrägförderer 20 einer Leittrommel 22 zugeführt. Die Leittrommel 22 leitet das Erntegut durch einen Einlassübergangsabschnitt 24 zu einer axialen Erntegutbearbeitungseinrichtung 26. Im Folgenden beziehen sich Richtungsangaben, wie vom und hinten, auf die Vorwärtsrichtung des Mähdreschers 10, die in der Figur 1 nach links verläuft.

Die Erntegutbearbeitungseinrichtung 26 umfasst ein Rotorgehäuse 34 und einen darin angeordneten Rotor 36, der eine hohle Trommel 38 aufweist, die sich in einen Beschickungsabschnitt 40, einen Dreschabschnitt 42 und einen Trennabschnitt 44 aufgliedert. Anstelle einer axialen Erntegutbearbeitungseinheit 26 können auch eine tangentiale Dreschtrommel und eine ihr folgende axiale Trenneinrichtung oder Strohschüttler verwendet werden.

Kömer und kleinere Erntegutbestandteile, die durch einen dem Dreschabschnitt 42 zugeordneten Dreschkorb und ein dem Trennabschnitt 44 zugeordneten Trennrost fallen, werden einem Reinigungssystem 28 mit einem Gebläse 46 und in eine Schwingbewegung versetzbaren Lamellensieben 48, 50 zugeführt. Das Reinigungssystem 28 entfernt die kleineren Bestandteile und führt die sauberen Kömer über einen Schneckenförderer 52 einem Elevator (nicht gezeigt) zu. Der Elevator legt die sauberen Kömer in einem Korntank 30 ab. Die Kömer im Korntank 30 können durch einen Entladeschneckenförderer 32 auf einen Komwagen, Anhänger oder Lastwagen entladen werden. Am rückwärtigen Ende des unteren Lamellensiebs 50 verbleibendes Erntegut wird mittels eines Schneckenförderers 54 und eines Überkehrförderers (nicht gezeigt) wieder der Erntegutbearbeitungseinrichtung 26 zugeführt. Die am rückwärtigen Ende des oberen Lamellensiebs 48 abgegebenen Erntegutreste, die im Wesentlichen aus kleinen Erntegutbestandteilen bestehen, werden durch einen Schwingbodenförderer 56 nach hinten in einen unteren Einlass 58 eines Strohhäckslers 60 gefördert.

Gedroschene, den Trennabschnitt 44 verlassende Erntegutreste (größtenteils Lieschblätter, Stängelteile, Blätter und Spindeln) werden durch einen Auslass 62 aus der Erntegutbearbeitungseinrichtung 26 ausgestoßen und einer Auswurftrommel 64 zugeführt. Die mit einem darunter angeordneten Boden 66 zusammenwirkende Auswurftrommel 64 wirft die Erntegutreste nach hinten aus. Rückwärtig der Auswurftrommel 64 befindet sich ein Trommelförderer 68, die Erntegutreste im Zusammenwirken mit einem oberen Leitboden 70 nach unten in einen oberen Einlass 72 des Strohhäckslers 60 lenkt.

Der Strohhäcksler 60 setzt sich aus einem Gehäuse 74 und einem darin angeordneten, um eine quer zur Vorwärtsrichtung und horizontal verlaufende Achse drehbaren Rotor 78 mit um den Umfang des Rotors 78 verteilten, paarweise pendelnd aufgehängten Häckselmessern 80 zusammen, welche mit gehäusefesten Gegenmessern 62 zusammenwirken. Das Gehäuse 74 weist in seinem oberen, rückwärtigen Bereich eine Öffnung 90 auf, oberhalb der ein sich vertikal erstreckender Kanal 94 folgt, an dessen Oberseite ein Auswurfkrümmer 98 folgt. Der Kanal 94 verengt sich nach oben und endet in einem Drehkranz 96. Am um die Hochachse drehbaren Drehkranz 96 ist der Auswurfkrümmer 98 mit einer um eine horizontale Achse 102 beweglichen, endseitigen Abgabeklappe 100 angebracht. Die Drehungen des Drehkranzes 96 um die Hochachse und der Abgabeklappe 100 um ihre horizontale Achse 102 erfolgen durch geeignete fremdkraftbetätigte Aktoren (nicht gezeigt), insbesondere Elektromotore oder Hydraulikmotore bzw. -zylinder, von der Bedienerkabine 16 aus gesteuert, um die Erntegutreste auf einen Anhänger zu lenken, der hinter dem Mähdrescher 10 oder einem anderen Transportfahrzeug hergezogen wird.

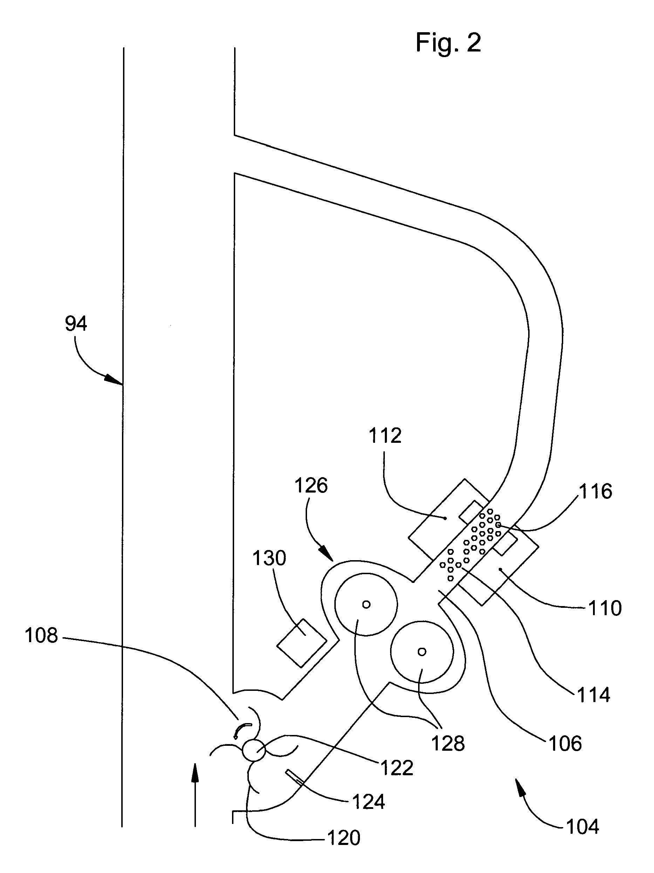

Der Kanal 94 wird im Erntebetrieb von den Erntegutresten durchströmt. Um die Inhaltsstoffe dieser Materialien, die in der Regel zur Bioenergieerzeugung oder als Viehfutter verwendet werden, zu erfassen, ist dem Kanal 94 eine Messanordnung 104 zugeordnet, die in der Figur 2 detaillierter dargestellt ist. Die Messanordnung 104 umfasst einen Abzweigkanal 106, der von einer Öffnung 108 im Kanal 94 ausgeht, und an dem zwei Messeinrichtungen 110, 112 angeordnet sind. Eine erste Messeinrichtung 110 umfasst ein Nahinfrarotspektrometer vorzugsweise ohne bewegliche optische Elemente, das mit einer breitbandigen Lichtquelle, die durch ein transparentes Fenster 114 eine im Abzweigkanal 106 enthaltene Probe 116 bestrahlt, und einem Analysator ausgestattet ist, der von der Probe 116 reflektiertes Licht durch ein dispersives Element (z. B. Gitter oder Prisma) spektral zerlegt und in unterschiedliche Richtungen ablenkt, während ein Detektor die Intensität des dispergierten Lichts ortsspezifisch erfasst. Hierzu sei auf die Offenbarung der DE 199 22 867 A verwiesen. Die Messeinrichtung 110 ist mit einem Rechner 118 verbunden, der anhand der erfassten Spektren die Inhaltsstoffe der Probe 116 ermittelt und vorzugsweise georeferenziert aufzeichnet. Bei der zweiten Messeinrichtung 112 handelt es sich um eine ebenfalls mit dem Rechner 118 verbundene Kamera, mit der granulometrische Eigenschaften der Probe 116 erfasst werden können.

Im Bereich der Öffnung 108 ist eine Fördereinrichtung 120 mit auf einer drehbaren Welle 122 angeordneten, entgegen der Drehrichtung nachlaufend gekrümmten Förderzinken angeordnet, welche während des Umlaufs der Welle 122 in den Kanal 94 hineinragen, um die Probe 116 aus dem eigentlichen Erntegutstrom zu entnehmen und im Zusammenwirken mit in den Abzweigkanal 106 ragenden, über dessen Breite verteilten, stationären Gegenmessern 124 vorzuzerkleinern. Die Gegenmesser 124 könnten ggf. auch entfallen. Stromab der Fördereinrichtung 120 folgt eine Bearbeitungseinrichtung 126, die zwei Walzen 128 umfasst, die zum Zermahlen der Probe 116 dienen. Der Abstand der Walzen 128 und damit die erreichte Korngröße ist mittels eines mit dem Rechner 118 verbundenen Aktors 130, bei dem es sich um einen Elektromotor handeln kann, verstellbar. Die Walzen 128 könnten auch zum Zerquetschen der Probe 116 dienen, wie ein an sich bekannter Körnerprozessor an einem Feldhäcksler, oder sie könnten durch eine Häckseleinrichtung ersetzt werden. Stromab der Messeinrichtungen 110, 112 führt der Abzweigkanal 106 die Probe 116 wieder in den Kanal 94 zurück. Dort könnte zur Verbesserung des Abtransports der Probe 116 eine weitere Fördereinrichtung vorgesehen werden. Es wäre auch denkbar, stromab der Messeinrichtungen eine Weiche anzubringen, mit der die Probe 116 wahlweise in den Kanal 94 zurückgeführt, in einen Probenbehälter (nicht gezeigt) geleitet oder direkt auf das Feld gelenkt wird. Es wäre auch möglich, die Probe 116 wieder zur Messeinrichtung 110 zurückzuführen, um die erfasste Oberfläche zu vergrößern.

Beim Erntebetrieb werden demnach regelmäßig Spektren der Probe 116 durch die Messeinrichtung 110 erfasst und die zugehörigen Inhaltsstoffe durch den Rechner 118 berechnet und georeferenziert aufgezeichnet. Anhand der Spektren und/oder der Bilder der zweiten Messeinrichtung 112 erkennt der Rechner 118, ob der Zerkleinerungsgrad der Probe 116 hinreichend ist, um sicherzustellen, dass hinreichend wenig Hohlräume in der Probe 116 enthalten sind und/oder ein hinreichend großer Anteil der Spektren anhand aufgeschlossener Proben 116 (und nicht nur anhand der Oberfläche nicht geschnittener Proben 116) ermittelt wurde. Sollte dieser Anteil nicht erreicht sein, veranlasst der Rechner 118 den Aktor 130, den Einwirkungsgrad der Bearbeitungseinrichtung 126 zu vergrößern, aber nur auf einen jeweils hinreichenden Zerkleinerungsgrad, um die Bearbeitungsgeschwindigkeit hinreichend hoch und analog die Messzeit klein zu halten.

Die Gegenmesser 124 und insbesondere die Bearbeitungseinrichtung 126 haben den Vorteil, dass auch bei relativ großen Erntegutteilchen im Kanal 94 eine qualitativ gute Erfassung der Inhaltsstoffe der Probe 116 ermöglicht wird. Die großen Erntegutteilchen werden durch die Gegenmesser 124 und die Bearbeitungseinrichtung 126 zerkleinert und/oder zerquetscht, so dass die Probe 116 in gemahlener, pulverisierter oder flüssiger Form vor die Messeinrichtung 110 gelangt. Durch die Erfassung der Qualität der Messwerte der Messeinrichtung 110 durch den Rechner 118 wird auch erkannt, wenn eine stärkere oder schwächere Bearbeitung der Probe 116 durch die Bearbeitungseinrichtung 126 erforderlich ist, und diese wird mittels des Aktors 130 selbsttätig durchgeführt.

## Patentansprüche

1. Messanordnung (104) zur Bestimmung der Inhaltsstoffe einer aus einem Erntegutstrom entnommenen Probe (116), mit einem Abzweigkanal (106), der sich an eine Öffnung (108) in einem von Erntegut durchströmbaren Kanal (94) anschließt, und einer dem Abzweigkanal (106) zugeordneten Messeinrichtung (110) zur Erfassung der Inhaltsstoffe der im Abzweigkanal (106) enthaltenen, aus dem Erntegutstrom entnommenen Probe (116), wobei im Abzweigkanal (106) zwischen der Öffnung (108) und der Messeinrichtung (110) eine Bearbeitungseinrichtung (126) zur Zerkleinerung und/oder zum Quetschen der Probe (116) angeordnet ist und die Messeinrichtung (110) mit einem Rechner (118) verbunden ist, der betreibbar ist, einen Aktor (130) zur Beeinflussung des Einwirkungsgrads der Bearbeitungseinrichtung (126) auf die Probe (116) basierend auf den von der Messeinrichtung (110) und/oder einer weiteren Messeinrichtung (112) gewonnenen Messwerten zu kontrollieren, **dadurch gekennzeichnet, dass** die Messeinrichtung (110) ein Nahinfrarotspektrometer ist und dass der Rechner (118) anhand der Spektren und/oder der Bilder der als Kamera ausgeführten zweiten Messeinrichtung (112) erkennt, ob der Zerkleinerungsgrad der Probe (116) hinreichend ist, um sicherzustellen, dass hinreichend wenig Hohlräume in der Probe (116) enthalten sind und/oder ein hinreichend großer Anteil der Spektren anhand aufgeschlossener Proben (116) ermittelt wurde und den Aktor (130) veranlasst, den Einwirkungsgrad der Bearbeitungseinrichtung (126) zu vergrößern, falls dieser Anteil nicht erreicht sein sollte.

2. Messanordnung (104) nach Anspruch 1, **dadurch gekennzeichnet, dass** die Bearbeitungseinrichtung (126) zum Häckseln und/oder Spalten und/oder Mahlen und/oder Zerquetschen der Probe eingerichtet ist.

3. Messanordnung (104) nach einem der Ansprüche 1 oder 2, **gekennzeichnet durch** eine im Bereich der Öffnung (108) angeordnete Fördereinrichtung (120), mit der die Probe (116) in den Abzweigkanal (106) hinein förderbar ist.

4. Messanordnung (104) nach Anspruch 3, **dadurch gekennzeichnet, dass** die Fördereinrichtung (120) mit stationären Gegenmessern (124) zusammenwirkt.

5. Landwirtschaftliche Erntemaschine, insbesondere Mähdrescher (10) oder Feldhäcksler, mit einem von Erntegut durchströmbaren Kanal (94) und einer Messanordnung (104) nach einem der vorhergehenden Ansprüche.

## Claims

1. Measuring arrangement (104) for determining the constituents of a sample (116) taken from a crop stream, comprising a branch channel (106) connected to an opening (108) in a channel (94) through which crops may flow and a measuring device (110) associated with the branch channel (106) for detecting the constituents of the sample (116) contained in the branch channel (106) and taken from the crop stream, where in the branch channel (106) between the opening (108) and the measuring device (110) a processing device (126) is arranged for reducing in size and/or for squeezing the sample (116) and the measuring device (110) is connected to a computer (118) which may be operated to monitor an actuator (130) for influencing the degree of effectiveness of the processing device (126) on the sample (116) based on the measured values obtained by the measuring device (110) and/or a further measuring device (112), **characterized in that** the measuring device (110) is a near-infrared spectrometer, and **in that** the computer (118) uses the spectra and/or the images of the second measuring device (112) which is configured as a camera to detect whether the degree of comminution of the sample (116) is sufficient to ensure that sufficiently few hollow spaces are contained in the sample (116) and/or a sufficiently large proportion of the spectra has been determined using opened samples (116) and causes the actuator (130) to increase the degree of action of the processing device (126) if this proportion should not have been reached.

2. Measuring arrangement (104) according to Claim 1, **characterized in that** the processing device (126) is designed for chopping and/or breaking up and/or milling and/or squeezing the sample.

3. Measuring arrangement (104) according to either of Claims 1 and 2, **characterized by** a conveying device (120) arranged in the region of the opening (108) by means of which the sample (116) may be conveyed into the branch channel (106).

4. Measuring arrangement (104) according to Claim 3, **characterized in that** the conveying device (120) cooperates with fixed counter blades (124).

5. Agricultural harvesting machine, in particular combine harvester (10) or forage harvester, with a channel (94) through which crops may flow and a measuring arrangement (104) according to one of the preceding claims.

## Revendications

1. Arrangement de mesure (104) pour déterminer les constituants d'un échantillon (116) prélevé dans un courant de produit moissonné, comprenant un conduit de dérivation (106) qui se raccorde à une ouverture (108) dans un conduit (94) pouvant être traversé par le courant de produit moissonné, et un dispositif de mesure (110) associé au conduit de dérivation (106) pour détecter les constituants de l'échantillon (116) prélevé du courant de produit moissonné qui se trouve dans le conduit de dérivation (106), un dispositif de traitement (126) destiné à broyer et/ou à concasser l'échantillon (116) étant disposé dans le conduit de dérivation (106) entre l'ouverture (108) et le dispositif de mesure (110), et le dispositif de mesure (110) étant relié à un calculateur (118) qui peut être commandé pour contrôler un actionneur (130) afin d'influencer le degré d'intervention du dispositif de traitement (126) sur l'échantillon (116) en se basant sur les valeurs mesurées acquises par le dispositif de mesure (110) et/ou un dispositif de mesure supplémentaire (112), **caractérisé en ce que** le dispositif de mesure (110) est un spectromètre à infrarouges proches et **en ce que** le calculateur (118) reconnaît, au moyen des spectres et/ou des images du deuxième dispositif de mesure (112) réalisé sous la forme d'une caméra, si le degré de broyage de l'échantillon (116) est suffisant pour garantir que le nombre d'espaces creux qui se trouvent dans l'échantillon (116) est suffisamment faible et/ou qu'une proportion suffisamment élevée de spectres a été déterminée au moyen des échantillons (116) désagrégés et l'actionneur (130) fait en sorte d'augmenter le degré d'intervention du dispositif de traitement (126) si cette proportion devait ne pas être atteinte.

2. Arrangement de mesure (104) selon la revendication 1, **caractérisé en ce que** le dispositif de traitement (126) est conçu pour hacher et/ou fragmenter et/ou moudre et/ou broyer l'échantillon.

3. Arrangement de mesure (104) selon l'une des revendications 1 ou 2, **caractérisé par** un dispositif de transport (120) disposé dans la zone de l'ouverture (108), avec lequel l'échantillon (116) peut être transporté vers l'intérieur du conduit de dérivation (106).

4. Arrangement de mesure (104) selon la revendication 3, **caractérisé en ce que** le dispositif de transport (120) interagit avec des contre-lames (124) fixes.

5. Moissonneuse agricole, notamment moissonneuse-batteuse (10) ou ramasseuse-hacheuse, comprenant un conduit (94) pouvant être traversé par le courant de produit moissonné et un arrangement de mesure (104) selon l'une des revendications précédentes.
